# EUROPÄISCHE PATENTSCHRIFT

(11) **EP 3 869 079 B1**
(45) Veröffentlichungstag und Bekanntmachung des Hinweises auf die Patenterteilung: **01.11.2023**
(21) Anmeldenummer: 21159089.8
(22) Anmeldetag: 24.02.2021
(51) Int. Cl.: F16L 58/18, G01L 1/24, F16L 9/147, F16L 58/10

(54) **UMMANTELTES ROHR MIT SENSOREN ZUR MESSUNG VON UMGEBUNGSPARAMETERN**
SHEATHED PIPE WITH SENSORS FOR MEASURING ENVIRONMENTAL PARAMETERS
TUBE REVÊTU POURVU DE CAPTEURS DE MESURE DES PARAMÈTRES ENVIRONNEMENTAUX

(30) Priorität: 24.02.2020 DE 102020104780
(43) Veröffentlichungstag der Anmeldung: 25.08.2021
(73) Patentinhaber: TDC International AG, 6004 Luzern (CH)
(72) Erfinder: WELKER, Daniel, Luzern (CH)
(74) Vertreter: Eisenführ Speiser

(56) Entgegenhaltungen:
- DE-T5-112007 002 761
- US-A- 6 004 639
- US-A1- 2017 276 267

## Beschreibung

Die Erfindung betrifft eine Rohrleitung, die von an ihren Längsenden miteinander verschweißten Rohren gebildet ist, welche eine Thermoplastmantelfläche und eine die Thermoplastmantelfläche umschließenden Schutzummantelung aufweisen. Die Schutzummantelung ist außen auf die Thermoplastmantelfläche aufgetragen und dient dem Schutz der Thermoplastmantelfläche vor mechanischen Beschädigungen. Die Schutzummantelung besteht vorzugsweise aus einem faserverstärkten Duroplast.

Es ist bekannt, erdverlegte Metallrohre zum Transport von flüssigen oder gasförmigen Medien mit einer Korrosionsschutzhülle in Form einer relativ dünnen Ummantelung aus Kunststoff, bevorzugt aus Polypropylen, Polyethylen, Fusion-bonded epoxy (FBE) oder Polyurethan zu versehen, um beispielsweise eine Korrosion des metallischen Rohrmaterials zu verhindern. Derartige Schichten aus Polypropylen, Polyethylen oder Polyurethan sichern einerseits einen ausgezeichneten Korrosionsschutz, da die Erdfeuchte mit dem metallischen Rohrmaterial nicht in Kontakt gelangen kann. Sie weisen aber andererseits in nachteiliger Weise nur eine relativ geringe mechanische Festigkeit auf. Zum Schutz vor einer unerwünschten mechanischen Beschädigung der Polypropylen-, Polyethylen- oder Polyurethan-Ummantelung durch Impakt, Abrieb oder Einschlitzen ist es bekannt, das Rohr zusätzlich mit einer mechanischen Schutzschicht, wie zum Beispiel mit einer faserverstärkten Duroplast-Ummantelung (GFK), zu versehen.

Rohre können oberirdisch verlegt, offen in einem Graben, der nach der Verlegung zugeschüttet wird oder in einem wesentlichen grabenlosen Rohrverlegeverfahren, beispielsweise per Horizontaldrilling, verlegt werden. In beiden Fällen hilft eine Kombination aus einer Korrosionsschutzhülle, die eine geringere mechanische Festigkeit aufweisen darf und einer Schutzummantelung, die als mechanische Schutzschicht außen auf die Korrosionsschutzhülle aufgebracht ist.

Nach dem Verlegen der Rohre ist deren Zustand nur schwer zu erfassen. Deshalb ist ein zuverlässiger Schutz der Rohre wichtig.

Für längere Rohrleitungen werden Rohre am Ort des Verlegens an ihren Längsenden miteinander verschweißt. Nach dem Verschweißen müssen die verschweißten Rohrenden und die Schweißnaht gegen Korrosion und mechanische Beschädigungen geschützt werden. Eine Lösung hierfür ist aus DE 10 2015 204 926 A1 bekannt.

Aus DE 11 2007 002 761 ist eine Pipeline bekannt, die von Schutzmaterial umgeben ist. In das Schutzmaterial ist ein rohrförmiges Element eingebettet, das Teil einer Leitung ist, in die ein Lichtleitfaser-Wellenleiter eingezogen werden kann.

Aufgabe dieser Erfindung ist es, eine weiter verbesserte Verlässlichkeit in Bezug auf die langfristige Unversehrtheit der Rohrleitung zu gewinnen.

Erfindungsgemäß wird diese Aufgabe durch eine Rohrleitung gelöst, die von an ihren Längsenden miteinander verschweißten Rohren mit einer Thermoplastmantelfläche und einer Schutzummantelung gebildet ist, wobei zwischen der Thermoplastmantelfläche und der Schutzummantelung und/oder in der Schutzummantelung Sensoren in Form von optischen Fasern oder mit optischen Fasern angeordnet sind, die im direkten Bereich der Rohrleitung unterschiedliche Umgebungsparameter erfassen und entsprechende Signale erzeugen oder verändern und weiterleiten können. Die gewonnenen Signale können an eine zentrale Auswertungsstation geleitet und dort, beispielsweise im Hinblick auf mögliche Störungen, ausgewertet werden. Die optischen Fasern einzelner Rohre der Rohrleitung sind an ihren Längsenden im Bereich der Schweißverbindung zwischen den Rohren miteinander verspleißt oder sind in Röhrchen geführt oder beides. Wenn die optischen Fasern in Röhrchen geführt sind, können sie nach dem Verbinden zweier Rohre in das Röhrchen eingeführt und durch die Röhrchen aufeinanderfolgender Rohre hindurchgezogen oder hindurchgeblasen werden, um eine durchgehende optische Faser zu haben.

Die optischen Fasern können einzeln oder in einem Faserverbund - nach Art eines Kabels mit einer Vielzahl von Fasern - vorliegen.

Ein Rohr mit einer Thermoplastmantelfläche und einer die Thermoplastmantelfläche umschließenden Schutzummantelung sowie zwischen der Thermoplastmantelfläche und der Schutzummantelung oder in der Schutzummantelung angeordneten optischen Fasern bietet einfache und praktikable aber auch qualitativ hochwertige Möglichkeiten Änderungen, von einem oder mehreren Umgebungsparametern einer verlegten Rohrleitung während des Einbaus sowie während des gesamten Zeitraums ihrer Benutzung, zu kontrollieren bzw. zu überwachen und die ermittelten Daten aufzuzeichnen oder entsprechende Maßnahmen einleiten zu können. So können zum Beispiel Erschütterungen oder Vibrationen durch z.B. Grabarbeiten, Spannungsänderungen durch das Setzungsverhalten einer Rohrleitung oder Temperaturschwankungen durch Medienaustritt infolge einer Beschädigung ermittelt und aufgezeichnet werden. Bei Bedarf können anschließend notwendige Reparatur- oder Korrekturmaßnahmen eingeleitet werden.

Erfindungsgemäß wird diese Aufgabe durch in axialer Rohrrichtung auf die Thermoplastmantelfläche aufgebrachte oder in der Schutzummantelung angeordnete Lichtleitfasern gelöst. Vorzugsweise sind über den Rohrumfang verteilt mehrere optische Fasern verteilt, um den gesamten Bereich der Rohrleitung überwachen zu können. Die Anzahl der erforderlichen optischen Fasern kann in Abhängigkeit vom Rohrdurchmesser bzw. von den jeweiligen Projektanforderungen gewählt sein oder richtet sich nach den Festlegungen des Rohrleitungsbetreibers. Vorzugsweise sind wenigstens zwei optische Fasern einander diametral gegenüberliegend auf dem Umfang des Rohrs angeordnet, so dass sich nach Verlegung mindestens eine optische Faser im Scheitel und mindestens eine optische Faser in der Sohle parallel zur Rohrachse auf dem Rohr befindet.

Auf die Thermoplastmantelfläche und die ggf. darauf aufgebrachten optischen Fasern ist die Schutzummantelung auf das Rohr aufgetragen. Die optischen Fasern können auch innerhalb der Schutzummantelung angeordnet sein. Die Schutzummantelung kann eine faserverstärkte Duroplast-Ummantelung sein oder eine Ummantelung aus Faserzement oder eine Kombination aus beidem.

Die Thermoplastmantelfläche ist vorzugsweise auf ein Metallrohr aufgebracht. Grundsätzlich kann jedoch auch das Rohr selbst ein Kunststoffrohr sein, dessen Wandung von einem Thermoplast gebildet ist und somit die Thermoplastmantelfläche bildet.

Wenn die Thermoplastmantelfläche auf ein Metallrohr aufgebracht ist, dient die Thermoplastmantelfläche als Korrosionsschutzhülle für das Metallrohr.

Weiterhin ist es bevorzugt, dass die optischen Fasern auf die Thermoplastmantelfläche aufgeklebt sind.

Alternativ können auch Führungsröhrchen für die optischen Fasern in Längsrichtung des Rohrs auf dessen Thermoplastmantelfläche aufgebracht oder in der Schutzummantelung angeordnet sein. Vorzugsweise sind für die Führungsröhrchen Zwischenröhrchen vorgesehen, um die Führungsröhrchen miteinander verbundener Rohre im Bereich von deren Schweißverbindung miteinander verbinden zu können. Die Führungsröhren können ein aufgeweitetes Längsende aufweisen, in das das Längsende eines anderen Röhrchens eingesteckt werden kann, um die Führungsröhren miteinander zu verbinden. In diesem Zusammenhang ist es vorteilhaft, wenn die Führungsröhrchen eine Flexibilität aufweisen, die ein elastisches Krümmen der Röhrchen erlaubt. Die Führungsröhrchen können aus Metall oder aus Kunststoff bestehen.

Die optischen Fasern sind vorzugsweise Glasfasern und können Monomodefasern oder Multimodefasern sein, wobei Monomodefasern bevorzugt sind.

Vorzugsweise sind die miteinander verspleißten Endabschnitte der optischen Fasern an wenigstens einem Rohrlängsende nicht fest auf die Thermoplastmantelfläche aufgebracht, sondern lose. Die losen Faserendabschnitte der optischen Fasern haben eine gestreckte Länge, die über das entsprechende Rohrlängsende hinausreicht. Die losen Faserendabschnitte können somit vor dem Verschweißen der Rohre über die Rohrlängsenden überstehen und bei miteinander verschweißten Rohrenden leicht direkt miteinander verbunden werden. Entsprechend ist beim Aufbringen der optischen Fasern in axialer Rohrrichtung darauf zu achten, dass die optischen Fasern an den Rohrenden mit einem festgelegten Mindestmaß überstehen, um vor Ort nach dem Zusammensetzen der einzelnen Rohre zu einer Rohrleitung, verbunden werden zu können. Vorzugsweise wird der Verbindungsbereich der Rohre vor Ort ebenfalls mit einer faserverstärkten Duroplast-Ummantelung versehen.

Vorzugsweise ist ein Rohr als Endrohr für die Rohrleitung ausgebildet. Ein Rohrlängsende dieses Rohrs ist gleichzeitig das Rohrleitungsende. Bei einem Rohr mit einem Rohrlängsende, das als Rohrleitungsende vorgesehen ist, sind optischen Fasern, vorzugsweise in einem Bogen zurückgeführt, sodass zwei parallel zu einer Längsachse des Rohrs verlaufende Abschnitte einer optischen Faser über einen 180° Bogenabschnitt dieser optischen Faser miteinander verbunden sind. Der Bogenabschnitt der optischen Faser hat vorzugsweise einen Abstand von mindestens 50 cm von demjenigen Rohrlängsende des Rohrs, das als Rohrleitungsende vorgesehen ist. Die optischen Fasern des ersten bzw. letzten Rohres einer Rohrleitung werden somit vorzugsweise in Schleife gelegt. So kann die komplette Rohrleitung mit der festgelegten Anzahl von optischen Fasern (über den Umfang der Rohrleitung verteilt) von einem Ende der Rohrleitung aus überwacht werden. Die durch die als Sensoren dienenden optischen Fasern ermittelten Daten werden an eine zentrale Datenauswertungsstation weitergeleitet und können dort verarbeitet und ausgewertet werden.

Vorzugsweise verlaufen immer zwei optische Fasern, als Faserpaar parallel zueinander mit einem seitlichen Abstand voneinander, der kleiner als ein zwanzigstel des Rohrumfangs ist.

In einer Ausführungsvariante weist das Rohr in Längsrichtung des Rohres verlaufende Röhrchen auf, die der Aufnahme der optischen Fasern dienen und die es erlauben, die optischen Fasern erst nach dem Verschweißen der Rohre zu einer Rohrleitung in die Röhrchen einzuziehen. In diesem Fall müssen beispielsweise optische Fasern als Sensoren nicht an jeder Verbindungsstelle zweier verschweißter Rohre miteinander verspleißt werden. Auch wird die Gefahr vermieden, dass die optischen Fasern während des Verlegens der Rohre beschädigt werden. Insbesondere in diesem Fall ist es vorteilhaft, wenn für die Führungsröhrchen Zwischenröhrchen vorgesehen sind, um die Führungsröhrchen miteinander verbundener Rohre im Bereich von deren Schweißverbindung miteinander verbinden zu können. Die Führungsröhren können ein aufgeweitetes Längsende aufweisen, in das das Längsende eines anderen Röhrchens eingesteckt werden kann, um die Führungsröhren miteinander zu verbinden. In diesem Zusammenhang ist es vorteilhaft, wenn die Führungsröhrchen eine Flexibilität aufweisen, die ein elastisches Krümmen der Röhrchen erlaubt. Die Führungsröhrchen können aus Metall oder aus Kunststoff bestehen. Wenn die Führungsröhrchen ausreichend flexibel sind und z.B. eine aufgeweitetes Längsende aufweisen und auch lang genug bemessen sind, können die Führungsröhrchen miteinander verschweißter Rohre nach dem Verschweißen im Bereich der Schweißverbindung einfach zusammengesteckt werden, ohne dass eine Zwischenröhrchen erforderlich ist.

In einer Ausführungsvariante weist das Rohr in radialer Richtung des Rohres zwischen der Thermoplastmantelfläche und der Schutzummantelung eine faserverstärkte Zwischenschicht mit in Längsrichtung des Rohres verlaufenden Verstärkungsfasern auf. In diese Zwischenschicht können dann die optischen Fasern oder die Röhrchen so eingebettet sein, dass sich ein kreisrunder Querschnitt auf der Außenseite der Zwischenschicht ergibt und Auswölbungen auf der Außenseite der Schutzummantelung vermieden werden.

Der Betreiber der Rohrleitung hat so die Möglichkeit, auf sich verändernde Umgebungsparameter, die sich in der Regel nachteilig auf die Funktionsfähigkeit der Rohrleitung auswirken können, zeitnah und effektiv reagieren zu können, um somit einer Beschädigung bzw. eines Ausfalls der gesamten Rohrleitung vorbeugen zu können.

Die Erfindung soll nun anhand von Ausführungsbeispielen, mit Bezug auf die Figuren, näher erläutert werden. Von den Figuren zeigt:
- Fig. 1:: eine schematische Seitenansicht einer von mehreren Rohren gebildeten Rohrleitung;
- Fig. 2:: eine schematisch, perspektivische Seitenansicht eines Rohres mit entlang des Rohrs in Längsrichtung aufgebrachten optischen Fasern;
- Fig. 3:: einen schematischen Querschnitt durch das Rohr aus Figur 2;
- Figur 4:: eine Abwicklung eines Rohrendabschnitts für ein Rohrleitungsende;
- Figur 5:: Rohrlängsenden von Rohren, die kein Rohrleitungsende bilden;
- Figur 6:: eine Abwicklung der Längsenden zweier miteinander an ihren Längsenden verschweißten Rohre;
- Figur 7:: einen schematischen Querschnitt durch ein Rohr mit Röhrchen, in die die optischen Fasern eingeführt sind;
- Figur 8:: einen schematischen Querschnitt durch ein alternatives Rohr mit Röhrchen;
- Figur 9:: einen schematischen Querschnitt durch ein Rohr mit Röhrchen
- Figuren 10 a und b:: ein Zwischenröhrchen zum Verbinden zweier Führungsröhrchen für eine oder mehrere optische Fasern;
- Figuren 11 a und b:: eine Verbindung zweier Führungsröhrchen mittels eines Führungsröhrchens mit einem aufgeweiteten Ende; und
- Figur 12:: ein Beispiel dafür, wie Zugdrähte zweier Rohre einer Rohrleitung miteinander verbunden werden können.

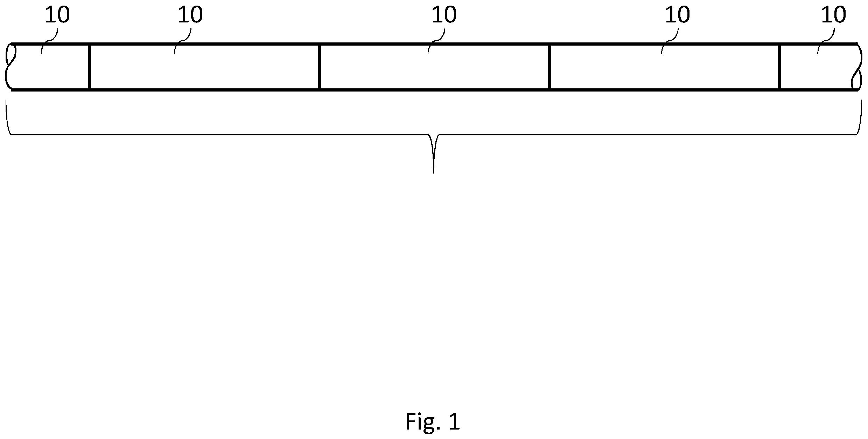

Figur 1 zeigt eine von einer Vielzahl von Rohren 10 gebildete Rohrleitung 12. Die Rohre 10 sind an ihren Längsenden durch Schweißen miteinander verbunden.

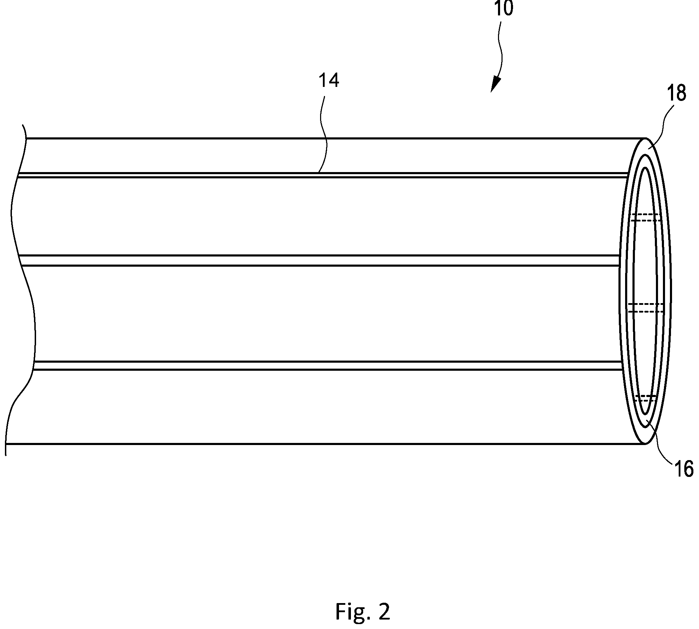

Figur 2 zeigt ein einzelnes Rohr 10 der Rohrleitung 12 mit sechs in Längsrichtung des Rohres 10 auf das Rohr 10 aufgebrachten, Sensoren bildenden optischen Fasern 14. Jeder Sensor wird von zwei parallel zueinander verlaufenden optischen Fasern 14 gebildet, sodass insgesamt sechs Paare optischer Fasern 14 um den Umfang des Rohres 10 gleichmäßig verteilt sind. Die optischen Fasern 14 sind vorzugsweise lichtleitende Glasfasern, insbesondere Monomodefasern. Alternativ können die optischen Fasern aber auch Multimodefasern sein.

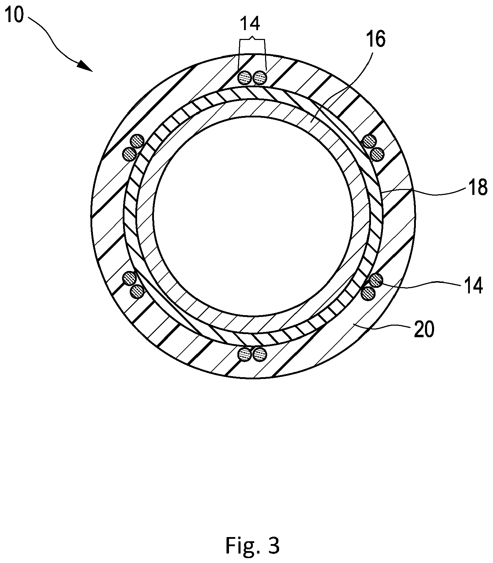

Figur 3 ist zu entnehmen, wie die sechs von jeweils einem Paar optischer Fasern 14 gebildeten Sensoren gleichmäßig über den Umfang des Rohres 10 verteilt sind. Das Rohr 10 ist ein Metallrohr mit einer metallischen Rohrwand 16. Auf die metallische Rohrwand 16 ist außen eine Thermoplastmantelfläche 18 als Korrosionsschutzhülle aufgebracht. Die Thermoplastmantelfläche 18 besteht beispielsweise aus Polyethylen, Polypropylen, Fusion-Bonded Epoxy (FBE) oder Polyurethan. Polyethylen ist hierbei der bevorzugte Werkstoff.

Außen auf die Thermoplastummantelung 18 sind die optischen Fasern 14 aufgebracht. Außen auf die Thermoplastummantelung 18 und die optischen Fasern 14 ist eine Schutzummantelung 20 aufgebracht, die vorzugsweise von einem faserverstärkten Duroplast gebildet ist, jedoch auch beispielsweise von einer Zementschicht insbesondere einer faserverstärkten Zementschicht oder auch einer Kombination aus einer faserverstärkten Duroplastschicht und einer Zementschicht gebildet sein kann. Die Schutzummantelung 20 dient dazu, die von ihr bedeckten optischen Fasern 14 und die Thermoplastmantelfläche 18 vor mechanischen Beschädigungen zu schützen.

In einer nicht dargestellten, alternativen Ausführungsvariante sind die optischen Fasern 14 innerhalb der Schutzummantelung 20 angeordnet.

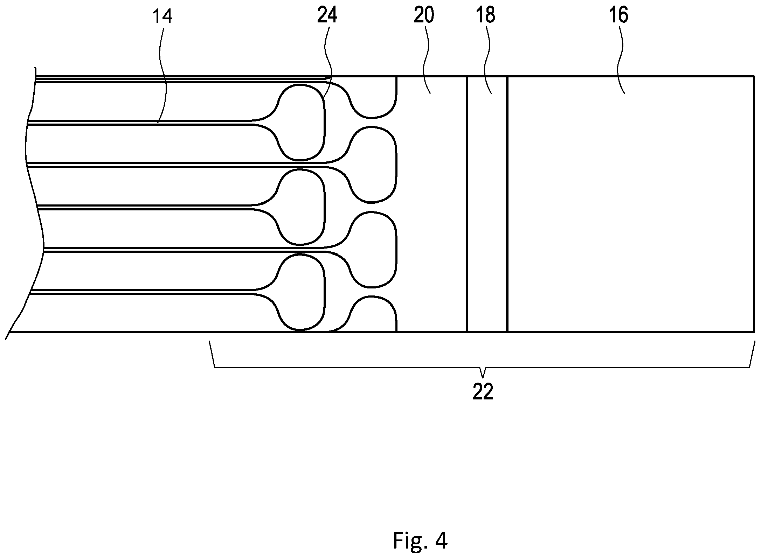

An einem Rohrlängsende 22, welches gleichzeitig ein Rohrleitungsende ist, sind die jeweils Sensoren bildenden optischen Fasern 14 in einer Schlaufe 24 zurückgeführt. Dies ist der Abwicklung eines Rohrlängsendes 22 in Figur 4 zu entnehmen. An dem Rohrlängsende 22 ist ein Teil der metallischen Rohrwand 16 unbedeckt und ragt somit in Längsrichtung ein Stück weit aus der Thermoplastmantelfläche 18 heraus. Auch ein Längsende der Thermoplastmantelfläche 18 ist nicht von der Schutzummantelung 20 bedeckt und ragt somit in Längsrichtung aus dieser heraus. Die optischen Fasern 14 und die Schlaufen 24 sind jedoch vollständig von der Schutzummantelung 20 bedeckt. Da die optischen Fasern 14 aufgrund der Schlaufen 24 zurückgeführt sind und somit an einem Ende der Rohrleitung enden, können von den optischen Fasern 14 gelieferte Signale an einem Rohrleitungsende ausgelesen werden.

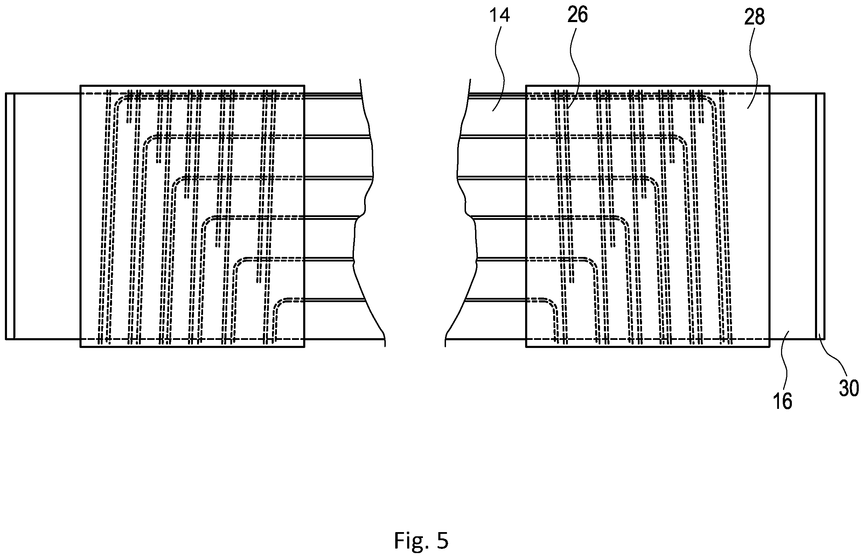

Typischerweise ist eine Rohrleitung 12 aus mehreren einzelnen Rohren 10 zusammengesetzt, die an ihren Längsenden jeweils miteinander verschweißt sind. Damit die optischen Fasern 14 miteinander zu verbindender Rohre 10 ebenfalls leicht miteinander verbunden werden können, sind an jedem Rohrlängsende 22 lose Faserendabschnitte 26 vorgesehen, deren Länge so bemessen ist, dass die gestreckten optischen Fasern 14 über ein jeweiliges Rohrlängsende hinausragen. Für den Transport eines Rohres sind die losen Faserendabschnitte 26 um das jeweilige Rohrlängsende 22 herumgewickelt, wie dies in Figur 5 gezeigt ist. Die losen Faserendabschnitte 26 sind für den Transport mit einem Transportschutz 28 bedeckt, der so gewählt ist, dass er ohne die Faserendabschnitte zu beschädigen entfernt werden kann. Wie bereits auch schon mit Bezug auf Figur 3 erläutert, ist die metallische Rohrwand 16 des Rohres 10 an dessen beiden Längsenden 22 unbedeckt, also nicht von einer Thermoplastmantelfläche bedeckt und auch nicht von einer Schutzummantelung. Auf diese Weise können die Rohre 10 an ihren Längsenden leicht miteinander verschweißt werden. Um eine Schweißkehle zu bilden, ist die metallische Rohrwand 16 an ihren beiden Längsenden voll umfänglich angeschrägt siehe Bezugsziffer 30.

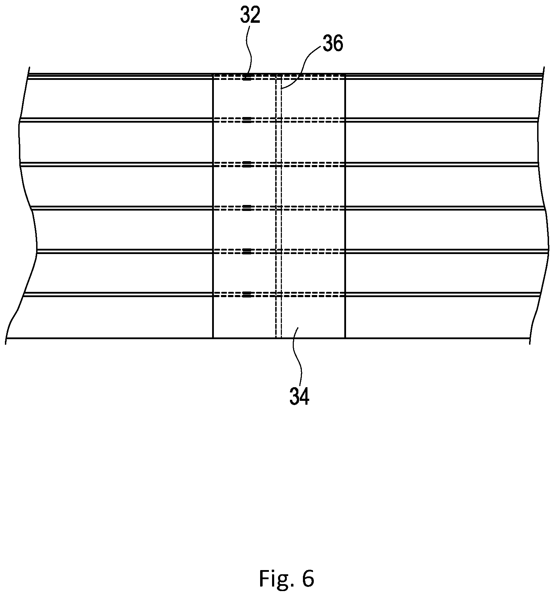

Nach dem Verschweißen zweier Rohre 10 an ihren jeweiligen Längsenden können die losen Faserenden der optischen Fasern 14 miteinander verbunden werden, beispielsweise durch Spleißen (siehe Bezugsziffer 32), sodass eine Signalübertragung von einem Faserendabschnitte 26 des einen Rohres zu einem entsprechenden Faserendabschnitte 26 des anderen Rohres möglich ist. Nach dem Verschweißen der Rohre 10 und dem Verbinden der zusammengehörenden Faserenden 26 der optischen Fasern 14 werden die verbundenen optischen Fasern 14 in dem Verbindungsbereich der beiden Rohre 10 fixiert und durch eine außen aufgebrachte Schutzschicht 34 geschützt, die auch eine Schweißnaht 36 bedeckt. Dies ist in Figur 6 abgebildet.

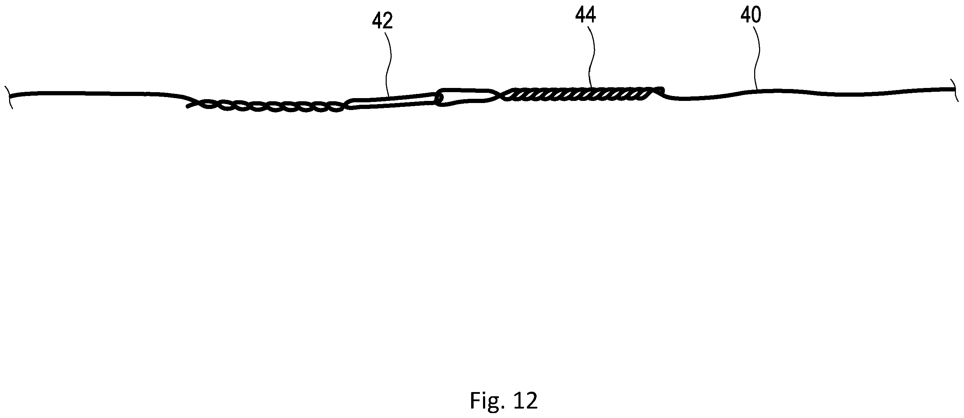

Anstelle die optischen Fasern 14 unmittelbar auf die Thermoplastmantelfläche 18 aufzubringen, können auch Röhrchen 38 vorgesehen sein, die die optischen Fasern 14 aufnehmen können. Im Falle derartiger Röhrchen 38 müssen die optischen Fasern 14 nicht von vornherein an einem jeweiligen Rohr 10 vorgesehen sein. Vielmehr können die optischen Fasern 14 nach dem Verschweißen der Rohre 10 zu einer längeren Rohrleitung beziehungsweise einem Rohrleitung 12 in die Röhrchen 38 eingezogen werden. Dazu muss beim Verschweißen der Rohre 10 zu einer Rohrleitung darauf geachtet werden, dass die Röhrchen 38 miteinander zu verschweißender Rohre 10 miteinander fluchten. Damit die optischen Fasern 14 nach dem Verschweißen der Rohre 10 zu einer Rohrleitung 12 leicht in die Röhrchen 38 eingeführt werden können, ist es vorteilhaft, wenn in den Röhrchen 38 zunächst jeweils ein Zugdraht 40 vorgesehen ist, der auf beiden Seiten über das jeweilige Röhrchen 38 hinaussteht, sodass die freien Enden eines jeweiligen Zugdrahtes mit einem freien Ende eines entsprechenden Zugdrahtes eines angrenzenden Rohres 10 verbunden werden können. Dies kann beispielsweise dadurch geschehen, dass an den Zugdrahtenden Drahtschlaufen 42 gebildet werden, die dann durch Verdrillen (44) gesichert werden können; siehe Figur 12. Eine in die Röhrchen 38 einzuziehende optische Faser 14 kann dann beispielsweise durch Verkleben mithilfe eines Klebstreifens mit einem freien Ende eines letzten Zugdrahtes 40 verbunden und so mithilfe sämtlicher miteinander verbundener Zugdrähte 40 durch sämtliche miteinander fluchtenden Röhrchen 38 hindurch entlang der gesamten Länge der Rohrleitungs eingezogen werden.

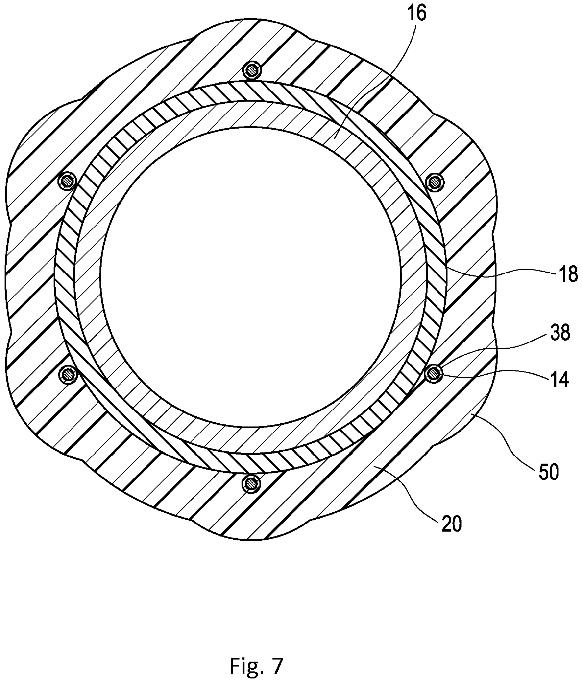

Wie dem Querschnitt in Figur 7 zu entnehmen ist, können die Röhrchen 38 unmittelbar auf die Thermoplastmantelfläche 18 aufgebracht sein und schließlich von der Schutzummantelung 20 bedeckt sein.

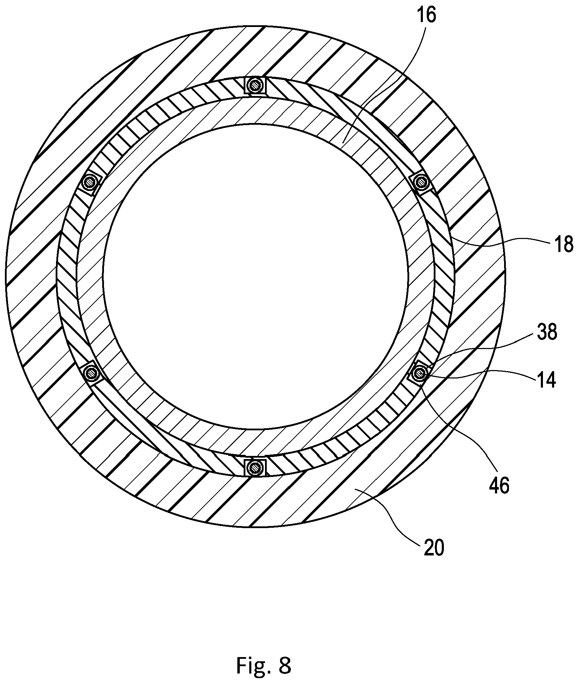

Alternativ kann die Thermoplastmantelfläche 18' auch Längsnuten 46 aufweisen, in die die Röhrchen 38 eingelassen sind. Dies ist in Figur 8 dargestellt. In einer nicht dargestellten Ausführungsvariante sind die optischen Fasern 14 auch unmittelbar - das heißt ohne entsprechende Röhrchen - in entsprechenden Längsnuten in der Thermoplastmantelfläche 18 eingelassen.

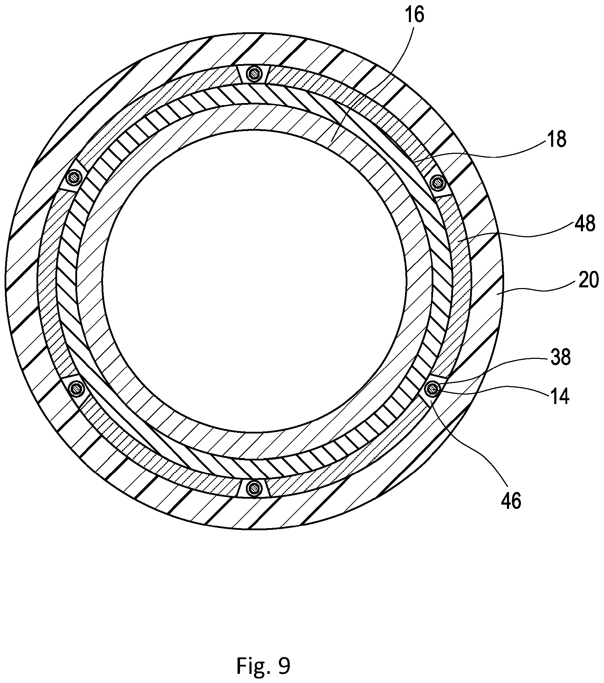

Gemäß einer weiteren Ausführungsvariante eines Rohres 10 sind die Röhrchen 38 oder auch die optischen Fasern 14 ähnlich dem Ausführungsbeispiel aus Figur 3 außen auf die Thermoplastmantelfläche 18 aufgebracht. Im Unterschied zu der in Figur 3 dargestellten Ausführungsvariante ist zwischen der Thermoplastmantelfläche 18 und der äußeren Schutzummantelung 20 noch eine weitere faserverstärkte Duroplastschicht 48 vorgesehen, die in Längsrichtung des Rohres 10 verlaufende Verstärkungsfasern aufweist und die in Umfangsrichtung des Rohres 10 bestehenden Zwischenräume zwischen den ebenfalls in Längsrichtung verlaufenden optischen Fasern 14 beziehungsweise den in Längsrichtung des Rohres 10 verlaufenden Röhrchen 38 auffüllt. Ein entsprechendes Ausführungsbeispiel ist im Querschnitt in Figur 9 dargestellt. In diesem Ausführungsbeispiel sind Fasern in der äußeren Schutzummantelung 20 vorzugsweise um die faserverstärkte Duroplastschicht 48 und die in diese eingelagerten optischen Fasern 14 beziehungsweise Röhrchen 38 herumgewickelt, sodass sich die Fasern der äußeren Schutzummantelung 20, anders als in der darunterliegenden faserverstärkten Duroplastschicht 48 nicht lediglich in Längsrichtung des Rohres 10 erstrecken, sondern zumindest auch eine Erstreckungskomponente ins Umfangsrichtung des Rohres 10 haben.

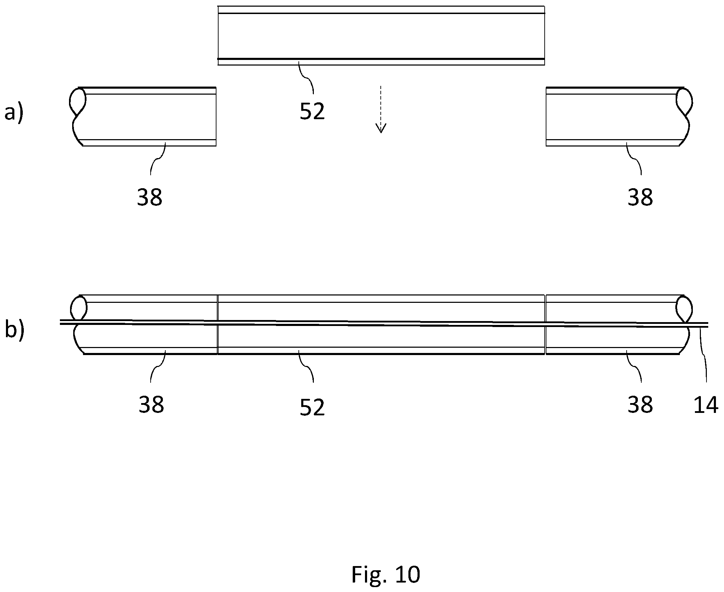

Um die Führungsröhrchen 38 im Bereich der Verbindungsstelle zwischen zwei Rohren 10 miteinander verbinden zu können, kann ein Zwischenröhrchen 52 vorgesehen sein, das zwischen den Längsenden zweier Führungsröhren 38 eingesetzt wird, um diese überbrückend miteinander zu verbinden; siehe Figuren 10 a und b.

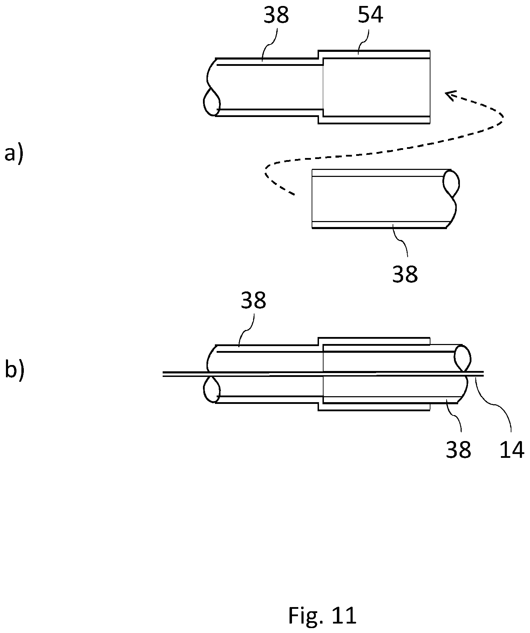

Um die Führungsröhrchen 38 im Bereich der Verbindungsstelle zwischen zwei Rohren 10 miteinander verbinden zu können, kann vorgesehen sein, dass ein Längsende 54 eines Führungsröhrchens aufgeweitet ist, so dass ein Längsende eines anderen Führungsröhrchens in dieses aufgeweitete Längsende 54 eingesteckt werden kann. Hierzu ist es hilfreich, wenn die Führungsröhrchen 38 ausreichend flexibel sind auch lang genug bemessen sind, damit die Führungsröhrchen 38 miteinander verschweißter Rohre 10 nach dem Verschweißen im Bereich der Schweißverbindung einfach zusammengesteckt werden können, ohne dass eine Zwischenröhrchen erforderlich ist. Dies ist in Figuren 11 a und b illustriert. Vorzugsweise besitzt das Röhrchen 38 eine Flexibilität, die es erlaubt, das Röhrchen 38 mit einem Radius von weniger als 10 cm, vorzugsweise weniger als 5 cm, elastisch zu krümmen ohne dass das Röhrchen dabei knickt oder plastisch verformt wird.

Auch das Zwischenröhrchen 52 kann ein oder zwei aufgeweitete Längsenden 54 aufweisen.

Durch Längsnuten 46 oder auch eine faserverstärkte Zwischenschicht 48 kann vermieden werden, dass sich die äußere Schutzummantelung 20 entlang der Röhrchen 38 oder auch entlang der optischen Fasern 14 nach außen auswölbt. In Figur 7 sind beispielhafte Auswölbungen 50 dargestellt, die andeuten sollen, dass außen auf die Thermoplastmantelfläche 18 aufgebrachte optischen Fasern 14 oder Röhrchen 38 dazu führen können, dass die äußere Querschnittsform der äußeren Schutzummantelung 20 nicht mehr annähernd kreisförmig ist, sondern dementsprechende Auswölbungen 50 aufweist.

### Bezugszeichenliste:

- 10: Rohr
- 12: Rohrleitung
- 14: optische Faser
- 16: metallische Rohrwand
- 18: Thermoplastmantelfläche
- 20: Schutzummantelung
- 22: Rohrlängsende
- 24: Schlaufe
- 26: Faserendabschnitte
- 28: Transportschutz
- 30: angeschrägtes Rohrende
- 32: Spleißstelle
- 34: Schutzschicht
- 36: Schweißnaht
- 38: Röhrchen
- 40: Zugdraht
- 42: Drahtschlaufe
- 44: Verdrillung
- 46: Längsnuten
- 48: faserverstärkte Zwischenschicht
- 50: Auswölbung
- 52: Zwischenröhrchen
- 54: aufgeweitetes Ende eines Röhrchens

## Patentansprüche

1. Rohrleitung (12) die von mehreren an ihren Längsenden miteinander verschweißten Rohren (10) gebildet ist, welche jeweils eine Thermoplastmantelfläche (18) und eine die Thermoplastmantelfläche (18) umschließenden Schutzummantelung (20) aufweisen, wobei zwischen der Thermoplastmantelfläche (18) und der Schutzummantelung (20) oder in der Schutzummantelung in Längsrichtung des Rohrs (10) verlaufende optische Fasern (14) angeordnet sind, die im Bereich der Schweißverbindung zwischen den Rohren (10) miteinander verspleißt sind oder die in Röhrchen geführt sind oder beides
**dadurch gekennzeichnet, dass** immer mindestens zwei optische Fasern (14) als Sensorpaar parallel zueinander mit einem seitlichen Abstand voneinander, der kleiner als ein zwanzigstel des Rohrumfangs ist, verlaufen.

2. Rohrleitung (12) gemäß Anspruch 1, **dadurch gekennzeichnet, dass** über den Rohrumfang verteilt, mehrere optische Fasern (14) verteilt sind.

3. Rohrleitung (12) gemäß Anspruch 2, **dadurch gekennzeichnet, dass** wenigstens zwei optische Fasern (14) einander diametral gegenüberliegend auf dem Umfang der Rohrleitung (12) angeordnet sind.

4. Rohrleitung (12) nach wenigstens einem der Ansprüche 1 bis 3, **dadurch gekennzeichnet, dass** auf die Thermoplastmantelfläche (18) und die darauf aufgebrachten optischen Fasern (14) die Schutzummantelung (20) aus faserverstärktem Duroplast oder Zement oder einer Kombination aus beidem aufgetragen ist.

5. Rohrleitung (12) nach wenigstens einem der Ansprüche 1 bis 4, **dadurch gekennzeichnet, dass** die Rohre (10) Metallrohre sind, auf deren metallische Rohrwand (16) die Thermoplastmantelfläche (18) außen aufgebracht ist und als Korrosionsschutzhülle für das jeweilige Metallrohr dient.

6. Rohrleitung (12) nach wenigstens einem der Ansprüche 1 bis 5, **dadurch gekennzeichnet, dass** die optischen Fasern (14) auf die Thermoplastmantelfläche (18) aufgebracht sind.

7. Rohrleitung (12) nach wenigstens einem der Ansprüche 1 bis 6, **dadurch gekennzeichnet, dass** die optischen Fasern (14) als Lichtleitfasern ausgebildet sind.

8. Rohrleitung (12) nach Anspruch 7, **dadurch gekennzeichnet, dass** die optischen Fasern (14) Monomodefasern sind.

9. Rohrleitung (12) nach wenigstens einem der Ansprüche 1 bis 8, **dadurch gekennzeichnet, dass** Endabschnitte der optischen Fasern (14) im Bereich der Schweißverbindung zwischen den Rohrlängsenden (22) nicht fest auf die Thermoplastmantelfläche (18) aufgebracht, sondern lose sind.

10. Rohrleitung (12) nach Anspruch 9, **dadurch gekennzeichnet, dass** die losen Faserendabschnitte (24) der optischen Fasern (14) eines jeweiligen Rohrs (10) eine gestreckte Länge haben, die über das entsprechende Rohrlängsende (22) des Rohrs (10) hinausreicht.

11. Rohrleitung (12) nach wenigstens einem der Ansprüche 1 bis 10, **dadurch gekennzeichnet, dass** die Rohre (10) in Längsrichtung des Rohres (10) verlaufende Röhrchen (38) aufweist, die der Aufnahme der optischen Fasern (14) dienen.

12. Rohrleitung (12) nach Anspruch 11, **dadurch gekennzeichnet, dass** das Röhrchen (38) wenigstens ein derart aufgeweitetes Längsende (54) aufweist, dass ein Längsende eines anderen Röhrchens (38) in das aufgeweitete Längsende (54) eingesteckt werden kann.

13. Rohrleitung (12) nach Anspruch 11 oder 12, **dadurch gekennzeichnet, dass** das Röhrchen (38) eine Flexibilität besitzt, die es erlaubt, das Röhrchen (38) mit einem Radius von weniger als 10cm elastisch zu krümmen.

14. Rohrleitung (12) nach wenigstens einem der Ansprüche 1 bis 13, **dadurch gekennzeichnet, dass** in radialer Richtung der Rohre (10) zwischen der Thermoplastmantelfläche (18) und der Schutzummantelung (20) eine faserverstärkte Duroplastschicht (48) mit in Längsrichtung der Rohre (10) verlaufenden Verstärkungsfasern vorgesehen ist.

## Claims

1. Pipeline (12) formed by a plurality of pipes (10) welded together at their longitudinal ends, each pipe having a thermoplastic jacket surface (18) and a protective sheathing (20) surrounding the thermoplastic jacket surface (18), wherein optical fibres (14) are arranged between the thermoplastic jacket surface (18) and the protective sheathing (20) or in the protective sheathing in the longitudinal direction of the pipes (10), said optical fibres (14) being spliced together in the region of the welded joint between the pipes (10) or are guided in small tubes or both,
**characterised in that** at least two optical fibres (14) always run parallel to one another as a sensor pair with a lateral distance from one another which is less than onetwentieth of the tube circumference.

2. Pipeline (12) according to claim 1, **characterised in that** multiple optical fibres (14) are distributed over the pipe circumference.

3. Pipeline (12) according to claim 2, **characterised in that** at least two optical fibres (14) are arranged diametrically opposite each other on the circumference of the pipeline (12).

4. Pipeline (12) according to at least one of claims 1 to 3, **characterised in that** the protective sheathing (20) of fibre-reinforced thermoset or cement or a combination of both is applied to the thermoplastic sheathing surface (18) and the optical fibres (14) applied thereto.

5. Pipeline (12) according to at least one of claims 1 to 4, **characterised in that** the pipes (10) are metal pipes, to the metal pipe wall (16) of which the thermoplastic jacket surface (18) is applied on the outside and serves as a corrosion protection sheath for the respective metal pipe.

6. Pipeline (12) according to at least one of claims 1 to 5, **characterised in that** the optical fibres (14) are applied on the thermoplastic jacket surface (18).

7. Pipeline (12) according to at least one of claims 1 to 6, **characterised in that** the optical fibres (14) are designed as optical wave guides.

8. Pipeline (12) according to claim 7, **characterised in that** the optical fibres (14) are monomode fibres.

9. Pipeline (12) according to at least one of claims 1 to 8, **characterised in that** end sections of the optical fibres (14) in the region of the weld joint between the longitudinal pipe ends (22) are not firmly applied to the thermoplastic jacket surface (18), but are loose.

10. Pipeline (12) according to claim 9, **characterised in that** the loose fibre end portions (24) of the optical fibres (14) of a respective pipes (10) have an unbent length that extends beyond the corresponding longitudinal pipe end (22) of the respective pipe (10).

11. Pipeline (12) according to at least one of claims 1 to 10, **characterised in that** the pipes (10) comprises tubes (38) extending in the longitudinal direction of the pipes (10) and serving to receive the optical fibres (14).

12. Pipeline (12) according to claim 11, **characterised in that** the tube (38) has at least one flared longitudinal end (54) such that a longitudinal end of another tube (38) can be inserted into the flared longitudinal end (54).

13. Pipeline (12) according to claim 11 or 12, **characterised in that** the tube (38) has a flexibility which allows the tube (38) to be elastically curved with a radius of less than 10cm.

14. Pipeline (12) according to at least one of claims 1 to 13, **characterised in that** a fibre-reinforced thermoset layer (48) with reinforcing fibres running in the longitudinal direction of the pipes (10) is provided between the thermoplastic jacket surface (18) and the protective sheathing (20) with respect to the radial direction of the pipes (10).

## Revendications

1. Tuyau (12) formé de plusieurs tubes (10), qui sont soudés les uns aux autres à leurs bouts longitudinaux et qui ont chacun une surface (18) latérale thermoplastique et un gainage (20) de protection entourant la surface (18) latérale thermoplastique, dans lequel, entre la surface (18) latérale thermoplastique et le gainage (20) de protection ou dans le gainage de protection sont disposées des fibres (14) optiques, qui s'étendent dans la direction longitudinale du tube (10), et qui sont épissées entre elles dans la partie du joint soudé entre les tubes (10) ou qui passent dans des petits tubes ou les deux,
**caractérisé en ce que** toujours au moins deux fibres (14) optiques s'étendent comme paire de capteurs parallèlement entre elles et à une distance latérale l'une de l'autre, qui est plus petite qu'un vingtième du pourtour du tube.

2. Tuyau (12) suivant la revendication 1, **caractérisé en ce que** plusieurs fibres (14) optiques sont réparties sur le pourtour du tube.

3. Tuyau (12) suivant la revendication 2, **caractérisé en ce qu'**au moins deux fibres (14) optiques sont disposées sur le pourtour du tuyau (12) en étant opposées diamétralement.

4. Tuyau (12) suivant au moins l'une des revendications 1 à 3, **caractérisé en ce que**, sur la surface (18) latérale thermoplastique et sur les fibres (14) optiques, qui y sont déposées, est appliqué le gainage (20) de protection en matière thermodurcissable renforcée par de la fibre ou en ciment ou une combinaison des deux.

5. Tuyau (12) suivant au moins l'une des revendications 1 à 4, **caractérisé en ce que** les tubes (10) sont des tubes métalliques sur la paroi (16) métallique desquels la surface (18) latérale thermoplastique est déposée à l'extérieur et sert de manchon de protection vis-à-vis de la corrosion sur les tubes métalliques respectifs.

6. Tuyau (12) suivant au moins l'une des revendications 1 à 5, **caractérisé en ce que** les fibres (14) optiques sont déposées sur la surface (18) latérale thermoplastique.

7. Tuyau (12) suivant au moins l'une des revendications 1 à 6, **caractérisé en ce que** les fibres (14) optiques sont sous la forme de fibres de guide d'ondes lumineuses.

8. Tuyau (12) suivant la revendication 7, **caractérisé en ce que** les fibres (14) optiques sont des fibres monomodes.

9. Tuyau (12) suivant au moins l'une des revendications 1 à 8, **caractérisé en ce que** des tronçons d'extrémité des fibres (14) optiques ne sont pas dans la partie du joint soudé entre les bouts (22) longitudinaux de tubes, déposés de manière fixe sur la surface (18) latérale thermoplastique, mais sont lâches.

10. Tuyau (12) suivant la revendication 9, **caractérisé en ce que** les tronçons (24) d'extrémité lâches des fibres (14) optiques d'un tube (10) respectif ont une longueur étirée, qui va au-delà de l'extrémité (22) longitudinale correspondante du tube (10).

11. Tuyau (12) suivant au moins l'une des revendications 1 à 10, **caractérisé en ce que** le tube (10) a des petits tubes (38), qui s'étendent dans la direction longitudinale du tube (10) et qui servent à la réception des fibres (14) optiques.

12. Tuyau (12) suivant la revendication 11, **caractérisé en ce que** le petit tube (38) a au moins une extrémité (54) longitudinale élargie, de manière à ce qu'une extrémité longitudinale d'un autre petit tube (38) puisse être enfilée dans l'extrémité (54) longitudinale élargie.

13. Tuyau (12) suivant la revendication 11 ou 12, **caractérisé en ce que** le petit tube (38) possède une souplesse, qui permet de courber élastiquement le petit tube (38) avec un rayon de moins de 10 cm.

14. Tuyau (12) suivant au moins l'une des revendications 1 à 13, **caractérisé en ce que**, dans la direction radiale du tube (10), il est prévu, entre la surface (18) latérale thermoplastique et le gainage (20) de protection, une couche (48) en une matière thermodurcissable renforcée par de la fibre, ayant des fibres de renfort s'étendant dans la direction longitudinale du tube (10).
